# EUROPEAN PATENT APPLICATION

(11) **EP 4 672 349 A2**
(43) Date of publication of application: **31.12.2025**
(21) Application number: 25185627.4
(22) Date of filing: 26.06.2025
(51) Int. Cl.: H01M 4/04, H01M 4/134, H01M 4/1395, H01M 4/40, H01M 10/052

(54) **ANODE FOR LITHIUM SECONDARY BATTERY AND METHOD FOR PREPARING THE SAME**

(30) Priority: 27.06.2024 KR 20240084587
(71) Applicant: SK On Co., Ltd., Seoul 03161 (KR); Industry-University Cooperation Foundation Hanyang University, Seoul 04763 (KR)
(72) Inventor: CHO, Yun Sun, 34124 Daejeon (KR); PARK, Seong Jin, 34124 Daejeon (KR); KIM, Dong Won, 06219 Seoul (KR); OH, Myung Keun, 04764 Seoul (KR); SIM, Hui Tae, 02622 Seoul (KR); PARK, Ye Eun, 04760 Seoul (KR); KIM, Hyo Jin, 05652 Seoul (KR)
(74) Representative: Prüfer & Partner mbB Patentanwälte · Rechtsanwälte

(57) **Abstract**

An anode for a lithium secondary battery includes a current collector (110), a lithium alloy layer (120) including lithium and an alloying metal different from lithium, and a protective layer (130) including a lithium compound and an oxide of the alloying metal. The lithium alloy layer is positioned between the current collector and the protective layer.

## Description

### [BACKGROUND OF THE INVENTION]

### BACKGROUND

### 1. Field of the Invention

The embodiments of the present disclosure relate generally to an anode for a lithium secondary battery and a method for preparing the same.

### 2. Description of the Related Art

A secondary battery is a battery that can be repeatedly charged and discharged. With the rapid advancements in information, communication, and display technologies, secondary batteries have been widely applied as power sources to various portable electronic and telecommunication devices such as camcorders, mobile phones, laptop computers, etc.. Recently, battery packs including a plurality of secondary batteries have also been developed and applied as power sources for eco-friendly automobiles such as electric vehicles, and hybrid vehicles.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may include a cathode and an anode. Electrodes such as the cathode and the anode may include an electrode active material that is capable of reversibly intercalating and deintercalating lithium ions, and current may be generated through a chemical reaction at the electrodes. The electrode for a lithium secondary battery may include a conductive material to enhance electronic conductivity, and may include a solid electrolyte to improve lithium ionic conductivity. The electrode for a lithium secondary battery may be formed by coating a composition for electrode formation. For example, the composition for electrode formation may be prepared by mixing components for electrode formation with a solvent, and may have, for example, a slurry form.

Recently, as the application scope of lithium secondary batteries continues to expand, high capacity and output characteristics have become increasingly required. However, since different heterogeneous materials are used as components for electrode formation, these components may become unevenly distributed during the manufacturing process of the electrode for a lithium secondary battery. In this case, the desired level of capacity and output characteristics may not be achieved.

### [SUMMARY OF THE INVENTION]

Embodiments of the present disclosure provide an anode for a lithium secondary battery with enhanced mechanical strength and ionic conductivity.

Another embodiment of the present disclosure provides a method for preparing an anode for a lithium secondary battery with enhanced mechanical strength and ionic conductivity.

An anode for a lithium secondary battery according to an embodiment of the present disclosure includes a current collector; a lithium alloy layer including lithium and an alloying metal different from lithium; and a protective layer including a lithium compound and an oxide of the alloying metal. The lithium alloy layer is positioned between the current collector and the protective layer.

In an embodiment, the alloying metal may include at least one selected from the group consisting of silver (Ag), magnesium (Mg), aluminum (Al), zinc (Zn), antimony (Sb), silicon (Si), tin (Sn), germanium (Ge), boron (B), indium (In), bismuth (Bi), sodium (Na), copper (Cu), barium (Ba), cobalt (Co), calcium (Ca), nickel (Ni), tantalum (Ta), manganese (Mn), and iron (Fe).

**In** an embodiment, a total weight of the oxide of the alloying metal included in a lower portion of the protective layer may be greater than a total weight of the oxide of the alloying metal included in an upper portion of the protective layer.

**In** an embodiment, the lithium compound of the protective layer may include at least one selected from the group consisting of lithium nitride, lithium oxynitride, lithium oxide, lithium hydroxide and lithium halide.

**In** an embodiment, in the XPS spectrum of O 1s obtained by X-ray photoelectron spectroscopy (XPS) for the protective layer, an intensity of a first peak observed in a region where the binding energy is 530 eV to 535 eV may be lower than an intensity of a second peak observed in a region where the binding energy is 525 eV or more and less than 530 eV.

In an embodiment, a total weight of the lithium included in an upper portion of the lithium alloy layer may be greater than a total weight of the lithium included in a lower portion of the lithium alloy layer.

In an embodiment, a content of the alloying metal in the lithium alloy layer may be 1 to 40 parts by weight based on 100 parts by weight of lithium.

In an embodiment, the lithium alloy layer may have a thickness of 5 µm to 40 µm.

In accordance with a method for preparing an anode for a lithium secondary battery according to an embodiment of the present disclosure, a preliminary layer including lithium and an alloying metal different from lithium is formed on one surface of a current collector. A cell including the preliminary layer, a lithium metal plate, and an electrodeposition solution including a solvent and a lithium source is assembled. The preliminary layer is converted into a lithium alloy layer including lithium and the alloying metal by applying a current to the cell, and a protective layer including a lithium compound and an oxide of the alloying metal is formed on the lithium alloy layer.

In an embodiment, the preliminary layer may be formed by applying a composition including metal particles including the alloying metal, a dispersion medium and a binder.

In an embodiment, the binder may include at least one selected from the group consisting of carboxymethyl cellulose, polyurethane, poly(ethylene oxide), poly(vinylidene fluoride), polyimide, poly(acrylic acid) and poly(vinyl acetate).

In an embodiment, a content of the binder may be 3% by weight to 11% by weight based on a total weight of the metal particles and the binder.

In an embodiment, the lithium source may include at least one selected from the group consisting of lithium nitrate (LiNO₃), lithium bis(trifluoromethanesulfonyl)imide (LiTFSI), lithium bis(fluorosulfonyl)imide (LiFSI), lithium difluorooxalatoborate (LiDFOB), lithium bisoxalatoborate (LiBOB), lithium difluorophosphate (LiPO₂F₂), lithium hexafluorophosphate (LiPF₆), lithium tetrafluoroborate (LiBF₄) and lithium perchlorate (LiClO₄).

In an embodiment, the solvent may include at least one selected from the group consisting of ethylene carbonate, vinylene carbonate, fluoroethylene carbonate, diethyl ether, 1,2-dimethoxyethane, 1,3-dioxolane and dimethyl sulfoxide.

In an embodiment, the current may be applied to have a current density of 0.4 mA/cm² or less.

In an embodiment, the current may be applied to have a charge amount of 2 mAh/cm² to 10 mAh/cm².

A lithium secondary battery according to an embodiment of the present disclosure includes a cathode; the above-described anode disposed opposite to the cathode; and a solid electrolyte layer disposed between the cathode and the anode.

In accordance with a method for preparing an anode for a lithium secondary battery according to an embodiment of the present disclosure, a preliminary layer including lithium and an alloying metal different from lithium is formed on one surface of a current collector. A cell including the preliminary layer, a lithium metal plate serving as a source of lithium ions, and an electrodeposition solution including a solvent and a lithium source to facilitate the movement of lithium ions within the cell is assembled. A current is applied to the cell triggering an electrochemical reaction and causing lithium ions from the electrochemical solution to migrate toward the preliminary layer to interact with the alloying metal of the preliminary layer to form a lithium alloy layer.

In an embodiment, a protective layer including a lithium compound and an oxide of the alloying metal on the lithium alloy layer may be formed, and the protective layer may have a thickness of 1 nm to 2 µm.

In an embodiment, the alloying metal may include at least one selected from the group consisting of silver (Ag), magnesium (Mg), aluminum (Al), zinc (Zn), antimony (Sb), silicon (Si), tin (Sn), germanium (Ge), boron (B), indium (In), bismuth (Bi), sodium (Na), copper (Cu), barium (Ba), cobalt (Co), calcium (Ca), nickel (Ni), tantalum (Ta), manganese (Mn), and iron (Fe), and a total weight of the oxide of the alloying metal included in a lower portion of the protective layer may be greater than a total weight of the oxide of the alloying metal included in an upper portion of the protective layer.

The anode for a lithium secondary battery according to the embodiments of the present disclosure may include a lithium alloy layer and a protective layer with enhanced ionic conductivity and mechanical strength. Accordingly, the interfacial stability of the all-solid-state battery may be improved by suppressing side reactions between lithium and the electrolyte and the formation of lithium dendrites.

According to embodiments of the present disclosure, in a method for preparing the anode for a lithium secondary battery, a current may be applied to a cell including a current collector and a lithium plate having a preliminary layer formed thereon. Accordingly, in-situ formation of the lithium alloy layer and the protective layer may be achieved.

The anode for a lithium secondary battery according to the present disclosure may be widely applied in green technology fields, such as electric vehicles, battery charging stations, as well as solar power generation, wind power generation, and the like, which use the batteries. **In** addition, the anode for a lithium secondary battery according to the present disclosure may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

The above features and other advantages of the embodiments of the present disclosure will be more clearly understood from the following detailed description taken in conjunction with the accompanying drawings, in which:
FIG. 1 is a schematic cross-sectional view illustrating an anode for a lithium secondary battery according to an embodiment of the present disclosure;
FIG. 2 is a graph illustrating the measured indentation depth according to the load applied to anodes of Example 1-1 and Comparative Example 1;
FIG. 3 is a graph illustrating the hardness of the anodes of Example 1-1 and Comparative Example 1;
FIGS. 4 to 7 are scanning electron microscopy (SEM) and energy-dispersive spectroscopy (EDS) images showing the surfaces of anodes of Examples 1-1 to 1-4, respectively;
FIGS. 8 to 10 are scanning electron microscopy (SEM) images showing the cross-sections of anodes of Examples 1-1, 1-5, and 1-6, respectively;
FIGS. 11 and 12 are scanning electron microscopy (SEM) images showing the anode-electrolyte interfaces of all-solid-state batteries of Example 2 and Comparative Example 2, respectively;
FIGS. 13 and 14 are charge-discharge curve graphs at 25 °C for the all-solid-state batteries of Example 2 and Comparative Example 2, respectively; and
FIGS. 15 and 16 are graphs showing the discharge capacity and Coulombic efficiency (η) according to the number of cycles at 25 °C for the all-solid-state batteries of Example 2 and Comparative Example 2, respectively.

### [DETAILED DESCRIPTION OF THE INVENTION]

The embodiments of the present disclosure provide an anode for a secondary battery including a lithium alloy layer and a protective layer. In addition, the embodiments of the present disclosure provide a method for preparing the anode for a lithium secondary battery.

Hereinafter, the embodiments of the present disclosure will be described in detail with reference to the accompanying drawings. However, these embodiments are merely examples, and the present disclosure is not limited to the specific embodiments described herein.

An embodiment of the present disclosure provides an anode for a lithium secondary battery including a current collector, a lithium alloy layer, and a protective layer, wherein the lithium alloy layer is positioned between the current collector and the protective layer.

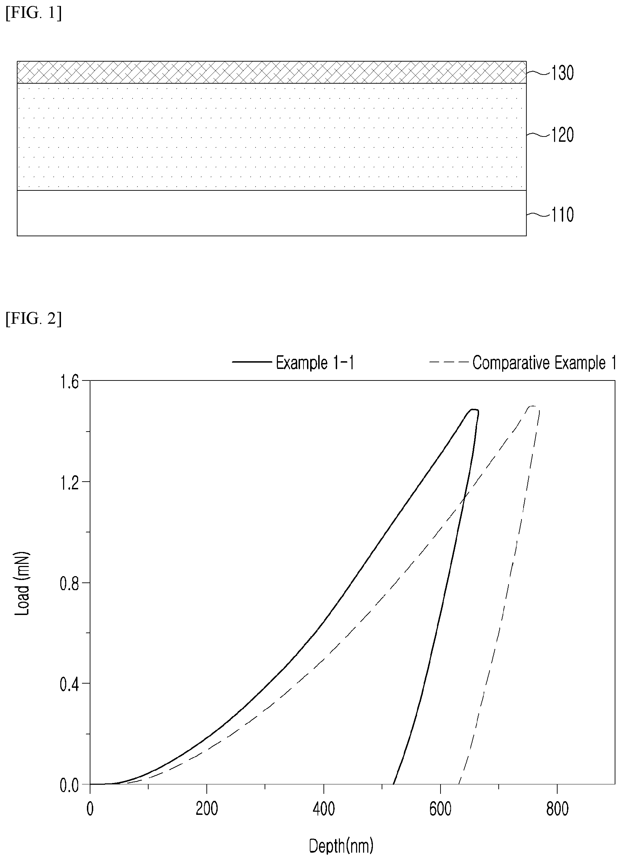

FIG. 1 is a schematic cross-sectional view illustrating the anode for a lithium secondary battery according to an embodiment of the present disclosure.

Referring to FIG. 1, the anode for a lithium secondary battery may include a current collector 110, a lithium alloy layer 120, and a protective layer 130. The lithium alloy layer 120 and the protective layer 130 are sequentially stacked over the current collector 110.

The current collector 110 may include copper (Cu), titanium (Ti), iron (Fe), stainless steel, cobalt (Co), nickel (Ni), and the like, but is the embodiments are not limited thereto.

The current collector 110 may be in the form of a foil, mesh, foam, rod, sheet woven from wire, or the like. For example, the current collector 110 may be in the form of a foil or a sheet.

The current collector 110 may have a thickness of 1 µm to 50 µm, or 5 µm to 30 µm, or 7 µm to 20 µm.

According to an embodiment, the lithium alloy layer 120 may include lithium and an alloying metal different from lithium. When the protective layer 130 and the lithium alloy layer 120 are formed by an in-situ method, the lithium alloy layer 120 may include lithium and a metal used for alloying (an alloying metal) that is different from lithium.

In an embodiment, the alloying metal may refer to a metal capable of forming an alloy with lithium, and for example, the alloying metal may include silver (Ag), magnesium (Mg), aluminum (Al), zinc (Zn), antimony (Sb), silicon (Si), tin (Sn), germanium (Ge), boron (B), indium (In), bismuth (Bi), sodium (Na), copper (Cu), barium (Ba), cobalt (Co), calcium (Ca), nickel (Ni), tantalum (Ta), manganese (Mn), iron (Fe), etc. These may be used alone or in combination of two or more thereof.

In an embodiment, the alloying metal may include silver (Ag), magnesium (Mg), aluminum (Al), zinc (Zn), antimony (Sb), silicon (Si), tin (Sn), and the like, specifically, the alloying metal may include silver (Ag), magnesium (Mg), aluminum (Al), etc. In an embodiment, the alloying metal may include silver (Ag). Accordingly, the mechanical strength, capacity, and cycle life characteristics of the anode may be further improved. In addition, deformation of the electrolyte-anode interface, which may be caused by pressure applied during the manufacturing process of an all-solid-state battery including the anode, may be reduced.

In an embodiment, the alloying metal may have a median particle diameter (D50) of 1 nm to 500 nm, 3 nm to 300 nm, 5 nm to 200 nm, or 10 nm to 100 nm.

In an embodiment, the alloying metal may have a spherical shape, an ellipsoidal shape or the like. For non-spherical particles the median particle diameter (D50) may refer to an equivalent diameter-a theoretical spherical diameter that the particle would have to yield the same measurement result e.g., in terms of volume with a spherical particle.

In an embodiment, the lithium alloy layer 120 may include an upper portion and a lower portion, wherein the upper portion of the lithium alloy layer 120 may be positioned closer to the protective layer 130, and the lower portion of the lithium alloy layer 120 may be positioned closer to the current collector 110.

In an embodiment, the upper portion of the lithium alloy layer 120 may contain a greater amount of lithium than the lower portion of the lithium alloy layer 120. In an embodiment, the total weight of the lithium included in the upper portion of the lithium alloy layer may be greater than the total weight of the lithium included in the lower portion of the lithium alloy layer.

In an embodiment, a content of the alloying metal in the lithium alloy layer 120 may be 1 part by weight ("wt part") to 40 wt parts, or 1 wt part to 30 wt parts, or 1 wt part to 20 wt parts based on 100 wt parts of lithium. Accordingly, the lithium alloy may be uniformly formed in the alloy layer.

In an embodiment, the lithium alloy layer 120 may have a thickness of 1 µm to 100 µm, 3 µm to 80 µm, or 4 µm to 50 µm, or 5 µm to 40 µm, or 10 µm to 30 µm, or 12 µm to 20 µm. Accordingly, the manufacturing time and cost of the lithium alloy layer 120 may be reduced, and the mechanical strength and ionic conductivity of the lithium alloy layer may be further improved.

The protective layer 130 may include a lithium compound. The lithium compound refers to a compound including a lithium element. For example, the lithium compound may be a compound including lithium and a non-metallic element, such as lithium nitride, lithium oxynitride, lithium oxide, lithium hydroxide and lithium halide, etc. These may be used alone or in combination of two or more thereof.

In an embodiment, the lithium compound may include lithium nitride (Li₃N), lithium oxide (Li₂O), or lithium fluoride (LiF).

For example, the lithium oxynitride may be represented by Formula 1 below.

[Formula 1] LiNₓO_{y}

In Formula 1, x may be in a range of 1 to 2, and y may be in a range of 2 to 3.

In an embodiment, the transport of lithium ions may be further facilitated when the protective layer 130 includes Li₃N, which has high ionic conductivity.

In an embodiment, the formation of lithium dendrites may be further suppressed when the protective layer 130 includes Li₂O and/or LiF both of which are known for their high mechanical strength.

According to an embodiment, the protective layer 130 may include an oxide of the alloying metal. For example, the oxide of the alloying metal may be represented by AgₓO_{y} (0<x≤3, 0<y≤3), MgₓO_{y} (0<x≤3, 0<y≤3), AlₓO_{y} (0<x≤3, 0<y≤3), ZnₓO_{y} (0<x≤3, 0<y≤3), SbₓO_{y} (0<x≤3, 0<y≤3), SiₓO_{y} (0<x≤3, 0<y≤3), SnₓO_{y} (0<x≤3, 0<y≤3), GeₓO_{y} (0<x≤3, 0<y≤3), BₓO_{y} (0<x≤3, 0<y≤3), InₓO_{y} (0<x≤3, 0<y≤3), BiₓO_{y} (0<x≤3, 0<y≤3), NaₓO_{y} (0<x≤3, 0<y≤3), CuₓO_{y} (0<x≤3, 0<y≤3), BaₓO_{y} (0<x≤3, 0<y≤3), CoₓO_{y} (0<x≤3, 0<y≤3), CaₓO_{y} (0<x≤3, 0<y≤3), NiₓO_{y} (0<x≤3, 0<y≤3), TaₓO_{y} (0<x≤3, 0<y≤3), MnₓO_{y} (0<x≤3, 0<y≤3), FeₓO_{y} (0<x≤3, 0<y≤3), etc. The metal oxide may include, for example, AgO, Ag₂O₃, MgO, Al₂O₃, ZnO, Sb₂O₃, SiO₂, SnO₂, GeO₂, B₂O₃, In₂O₃, Bi₂O₃, Na₂O, Cu₂O, CuO, BaO, Co₂O₃, CaO, NiO, TaO₂, MnO, MnO₂, FeO, Fe₂O₃, etc.

In an embodiment, the oxide of the alloying metal may include AgO, Ag₂O₃, MgO, Al₂O₃, etc.

In an embodiment, the oxide of the alloying metal may include AgO, Ag₂O₃.

In an example, the protective layer 130 may include the above-described lithium compound and the above-described oxide of the alloying metal. The lithium compound and the oxide of the alloying metal may be formed by an in-situ method during the formation of the lithium alloy layer 120 and the protective layer 130. As the lithium alloy layer 120 and the protective layer 130 are formed by the in-situ method and the protective layer 130 includes the lithium compound and the oxide of the alloying metal, the cycle characteristics of the secondary battery may be further improved.

More specifically, in an embodiment when an electrical current is applied to the cell, lithium ions (Li⁺) are driven from the electrodeposition solution or lithium metal plate toward the preliminary layer. Upon reaching the preliminary layer, these lithium ions react with the alloying metal present in the preliminary layer. This reaction results in the formation of a lithium alloy. Lithium combines with the alloying metal (such as, for example, nickel, cobalt, or manganese) at the atomic level through an alloying process, creating a layer with improved mechanical, chemical, or electrochemical properties. During or after the formation of the lithium alloy layer, lithium reacts with oxygen species and other compounds present in the cell environment. This leads to the formation of a lithium compound on the surface of the lithium alloy layer. The alloying metal present in the lithium alloy layer may also undergo oxidation to produce metal oxides (e.g., nickel oxide or cobalt oxide) that further contribute to the protective layer.

The lithium compound and the metal oxides together form the protective layer on top of the lithium alloy layer. This protective layer provides benefits such as enhanced mechanical strength, chemical stability, and prevention of dendrite growth, which improves the overall performance and durability of the anode and the battery. In an embodiment, the protective layer 130 may include a lower portion and an upper portion, wherein the lower portion of the protective layer 130 may be positioned closer to the lithium alloy layer 120, and the upper portion of the protective layer 130 may be positioned more distantly from the lithium alloy layer 120.

When the lithium alloy layer 120 and the protective layer 130 are formed, the lower portion of the protective layer 130 may contain a greater amount of the oxide of the alloying metal than the upper portion of the protective layer 130. Accordingly, the total weight of the oxide of the alloying metal included in the lower portion of the protective layer 130 may be greater than the total weight of the oxide of the alloying metal included in the upper portion of the protective layer 130.

In an embodiment, the protective layer 130 may have a thickness of 1 nm to 2 µm, 1 nm to less than 500 nm, 1 nm to 300 nm, 1 nm to 100 nm, 1 nm to 50 nm, 1 nm to 20 nm, or 1 nm to 10 nm.

In an embodiment, the protective layer 130 may include an oxide of the alloying metal. Forming the protective layer 130 to include an oxide of the alloying metal further improves the mechanical strength and chemical stability of the protective layer 130.

In an embodiment, in the XPS spectrum of O 1s obtained by X-ray photoelectron spectroscopy (XPS) for the protective layer 130, the intensity of a first peak observed in a region where the binding energy is 530 eV to 535 eV may be lower than the intensity of a second peak observed in a region where the binding energy is 525 eV or more and less than 530 eV. Here, the XPS refers to X-ray photoelectron spectroscopy, and may be measured using a K-Alpha X-ray photoelectron spectrometer (XPS) system from Thermo Fisher. The X-ray source may be Al Kα, and the measurement may be conducted under ultra-high vacuum conditions. Without wishing to be bound by any particular theory, the mechanical strength of the anode for a lithium secondary battery may be further enhanced by exhibiting the above-described XPS spectrum.

Another embodiment of the present disclosure provides a method for preparing an anode for a lithium secondary battery.

According to an embodiment, a method for preparing an anode for a lithium secondary battery includes, forming a preliminary layer including lithium and an alloying metal different from lithium on one surface of a current collector. A cell including the preliminary layer, a lithium metal plate, and an electrodeposition solution including a solvent and a lithium source may then be assembled. By applying a current to the cell, the preliminary layer may be converted into a lithium alloy layer including lithium and the alloying metal, and a protective layer including a lithium compound may be formed on the lithium alloy layer. Specifically, the protective layer may further include the above-described oxide of the alloying metal. Accordingly, the lithium alloy layer and the protective layer may be formed simultaneously in a single process.

In an embodiment, the preliminary layer may be formed by applying a composition including metal particles including the alloying metal, a dispersion medium, and a binder.

In an embodiment, the alloying metal may be the above-described alloying metal.

In an embodiment, the dispersion medium may be a liquid or a gas that serves as a medium for dispersing the metal particles. For example, the dispersion medium may include N-methyl-2-pyrrolidone (NMP), N,N-dimethylformamide (DMF), and the like.

In an embodiment, the binder may include carboxymethyl cellulose, polyurethane, poly(ethylene oxide), poly(vinylidene fluoride), polyimide, poly(acrylic acid), poly(vinyl acetate), and the like. These may be used alone or in combination of two or more thereof.

In an embodiment, a content of the binder may be 3% by weight ("wt%") to 12 wt%, 3 wt% to 11 wt%, 4 wt% to 10 wt%, 4 wt% to 9 wt%, or 4 wt% to 8 wt% based on the total weight of the dispersion medium.

In an embodiment, the content of the binder may be 3 wt% to 11 wt%, 3 wt% to 10 wt%, 4 wt% to 9 wt%, or 4 wt% to 8 wt% based on the total weight of the metal particles and the binder. Within the above range, the bonding strength between lithium and the current collector may be significantly improved, and deterioration in capacity characteristics may also be prevented.

In an embodiment, the lithium metal plate may include impurities.

In an embodiment, the lithium metal plate may be in the form of a thin film.

In an embodiment, the lithium source may include lithium nitrate (LiNO₃), lithium bis(trifluoromethanesulfonyl)imide (LiTFSI), lithium bis(fluorosulfonyl)imide (LiFSI), lithium difluorooxalatoborate (LiDFOB), lithium bisoxalatoborate (LiBOB), lithium difluorophosphate (LiPO₂F₂), lithium hexafluorophosphate (LiPF₆), lithium tetrafluoroborate (LiBF₄) and lithium perchlorate (LiClO₄), and the like. These may be used alone or in combination of two or more thereof.

In an embodiment, the lithium source may include lithium nitrate (LiNO₃) and lithium bis(fluorosulfonyl)imide (LiFSI). Accordingly, the mechanical properties and ionic conductivity of the battery may be improved, thereby enhancing the cycle life characteristics.

In an embodiment, the solvent may include ethylene carbonate, vinylene carbonate, fluoroethylene carbonate, diethyl ether, 1,2-dimethoxyethane, 1,3-dioxolane and dimethyl sulfoxide, etc. These may be used alone or in combination of two or more thereof.

In an embodiment, the lithium compound may be the above-described lithium compound.

In an embodiment, the oxide of the alloying metal may be the above-described oxide of the alloying metal.

In an embodiment, the current may be applied to have a current density of 0.4 mA/cm² or less, greater than 0 and less than 0.4 mA/cm², greater than 0 and less than 0.3 mA/cm², or greater than 0 and less than 0.2 mA/cm². Within the above range, uniform electrodeposition of lithium may occur.

In an embodiment, the current may be applied to have a charge amount of 2 mAh/cm² to 10 mAh/cm², 3 mAh/cm² to 8 mAh/cm², or 4 mAh/cm² to 6 mAh/cm².

In an embodiment, a coating method of the current collector may include dip coating, spray coating, spin coating, doctor blade coating, drop casting, solid coating, etc. These may be used alone or in combination of two or more thereof.

In an embodiment, the anode may be used in an all-solid-state battery. Accordingly, the energy density and safety of the secondary battery may be improved.

The lithium alloy layer 120 of the anode may serve as an anode active material. The anode may further include an anode conductive material. The anode conductive material may be included to facilitate electron migration between particles of the anode active material. For example, the anode conductive material may include carbon-based conductive materials such as graphite, carbon black, graphene, carbon nanotubes, and/or metal-based conductive materials, including perovskite materials, such as tin, tin oxide, titanium oxide, LaSrCoO₃ (lanthanum strontium cobalt oxide) and LaSrMnO₃ (lanthanum strontium manganese oxide).

A lithium-ion battery according to an embodiment may include a cathode, an anode disposed opposite to the cathode, and a solid electrolyte layer disposed between the cathode and the anode.

The cathode may include a cathode active material. Examples of the cathode active material may include one or more compounds selected from lithium iron phosphate compounds, lithium cobalt oxides, lithium manganese oxides, lithium nickel oxides, or lithium composite oxides. For example, the cathode active material may include layered compounds such as lithium cobalt oxide (LiCoO₂) or lithium nickel oxide (LiNiO₂), lithium manganese oxides such as LiMnO₃, LiMn₂O₃, and LiMnO₂; lithium copper oxide (Li₂CuO₂); vanadium oxides such as LiV₃O₈, LiFe₃O₄, V₂O₅ and Cu₂VO₇; lithium iron phosphate oxides such as LiFePO₄, and the like.

In an embodiment, the cathode active material may include a compound represented by Formula 2 below.

[Formula 2] LiₐNi_{b}M_{1-b}O₂

In Formula 2, a may be in a range of 0.95≤a≤1.08, b may be b≥0.5, and M may be at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn and Ba.

In an embodiment, the cathode active material includes nickel (Ni) and may further include at least one of cobalt (Co) or manganese (Mn). For example, a nickel-cobalt-manganese (NCM)-based lithium oxide may be used as the cathode active material.

Nickel (Ni) is used for enhancing the capacity of lithium secondary batteries. Increasing the nickel content in the battery composition leads to significant improvements in both capacity and output performance of the lithium secondary battery. However, an excessive increase in the nickel content may negatively impact the cycle life of the lithium secondary battery, potentially reducing its longevity. Additionally, an excessive increase in the nickel content may compromise both the mechanical and electrical stability of the battery system.

Also, the conductivity or resistance of the lithium secondary battery may be improved by the cobalt (Co). Furthermore, the mechanical and electrical stabilities of the lithium secondary battery may be improved by manganese (Mn).

The chemical structure represented by Formula 2 shows a bonding relationship between elements included in the lattice structure or crystal structure of the cathode active material, and does not exclude other additional elements. For example, M may be provided as a main active element of the cathode active material. Here, it should be understood that Formula 2 is provided to express the bonding relationship between the main active elements, and is a formula encompassing the introduction and substitution of the additional elements.

In an embodiment, the cathode active material may further include auxiliary elements which are added to the main active elements to enhance chemical stability thereof or the crystal structure. The auxiliary element may be incorporated into the crystal structure together to form a bond, and it should be understood that this case is also included within the chemical structure represented by Formula 2.

According to an embodiment, the cathode may further include a cathode binder and a cathode conductive material. The cathode binder and the cathode conductive material may be substantially the same as or similar to the above-described binder and the anode conductive material.

For example, the cathode binder may be an organic binder such as polyvinylidene fluoride (PVDF). In addition, for example, the cathode binder may be used together with a thickener such as carboxymethyl cellulose (CMC).

By including the solid electrolyte layer, the lithium secondary battery may have a high energy density and improved safety.

The solid electrolyte layer may include a sulfide-based electrolyte, an oxide-based electrolyte, and/or a polymer electrolyte. The polymer electrolyte may include an ion-conductive polymer or a gel polymer electrolyte.

In an embodiment, the sulfide-based electrolyte may be represented by Formula 3 below.

[Formula 3] LiₑY_{f}P_{g}SₕZᵢ

In Formula 3, e, f, g, h and I may satisfy 0 < e < 12, 0≤f≤6, 0≤g≤6, 0 < h≤12, 0≤i≤9, Y may include at least one element of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z may include at least one element of F, Cl, Br and I.

The sulfide-based electrolyte may include, for example, Li₆PS₅Cl, Li₆PS₅Br, Li₆PS₅I, Li₁₀GeP₂S₁₂, Li₃PS₄, Li₇P₃S₁₁, and the like. These may be used alone or in combination of two or more thereof.

For example, the sulfide-based electrolyte may include sulfur (S), phosphorus (P), lithium (Li), etc. as constituent elements.

In an embodiment, the sulfide-based electrolyte may be prepared by melting and rapid quenching, or by mechanical milling a starting material such as Li₂S (lithium sulfide), P₂S₅ (Phosphorus pentasulfide) In addition, heat treatment may be performed after such processing.

In an embodiment, the sulfide-based electrolyte may be in an amorphous state, a crystalline state, or a mixed state thereof.

In an embodiment, the oxide-based electrolyte may include an ion-conductive compound containing a metal oxide and/or oxygen.

For example, the oxide electrolyte may include Li₇La₃Zr₂O₁₂ (lithium lanthanum zirconium oxide) having a garnet structure, Li₃ₓLa_{2/3-x}TiO₃ (lithium lanthanum titanium oxide) having a perovskite structure, Li₁₊ₓAlₓGe₂₋ₓ(PO₄)₃ (lithium aluminum germanium phosphate) having a NASICON structure. These may be used alone or in combination of two or more thereof.

The polymer electrolyte may include poly(ethylene oxide), poly(propylene oxide), poly(ethylene carbonate), poly(propylene carbonate), poly(trimethylene carbonate), poly(ε-caprolactone), poly(1,4-butylene adipate), polyacrylonitrile, etc. These may be used alone or in combination of two or more thereof.

In an embodiment, the solid electrolyte layer may include a sulfide-based electrolyte. The sulfide-based electrolyte may have high ionic conductivity and mechanical strength, thereby further improving the characteristics of the lithium secondary battery.

In an embodiment, the solid electrolyte layer may include a binder. The binder may be, for example, styrene butadiene rubber (SBR), polytetrafluoroethylene, polyvinylidene fluoride, polyethylene, and the like.

### Example 1-1

A composition was prepared by dispersing 60 wt parts of silver nanoparticles (particle diameter of about 500 nm, US Research Nanomaterials) in 100 wt parts of a dispersion liquid containing 5 wt% of a binder, polyvinylidene fluoride-co-hexafluoropropylene (PVdF-HFP, Kureha), in n-methyl-2-pyrrolidone (NMP, Sigma-Aldrich) as a dispersion medium. The composition was applied to a copper current collector (thickness: 10 µm) and dried to form a preliminary layer on the current collector.

A polypropylene/polyethylene/polypropylene microporous membrane (Celgard H1612) was placed between the current collector having the preliminary layer formed on one side and a lithium plate (thickness: 200 µm), and then an electrodeposition solution was injected to assemble a cell.

The electrodeposition solution was prepared by mixing a first solution containing 1 wt% of lithium nitrate (LiNO₃, Sigma Aldrich) as a lithium source dissolved in 1,3-dioxolane (Sigma Aldrich) as a solvent and a second solution containing 2.5 M of lithium bis(fluorosulfonyl)imide (LiFSI, Dongwha Electrolyte) dissolved in 1,2-dimethoxyethane (Sigma Aldrich) as a solvent at a volume ratio of 1:1.

The preliminary layer was converted into a lithium alloy layer by applying a current to the cell at a current density of 0.4 mA/cm² for 10 hours (charge amount: 4.0 mAh/cm²), and a protective layer was formed. The lithium alloy layer had a thickness of 20 µm, and the content of silver was 40 wt parts based on 100 wt parts of lithium in the lithium alloy layer.

The cell was disassembled to obtain an electrode, and the electrode was washed with 1,2-dimethoxyethane, dried for 24 hours in a glove box (MBRAUN) filled with argon (Ar) gas, and then pressed using a roll press at room temperature to prepare an anode.

### Example 1-2

An anode was prepared in the same manner as in Example 1-1, except that 30 wt parts of silver nanoparticles were used instead of 60 wt parts of silver nanoparticles.

The content of silver in the lithium alloy layer was 20 wt parts based on 100 wt parts of lithium in the lithium alloy layer.

### Example 1-3

An anode was prepared in the same manner as in Example 1-1, except that 90 wt parts of silver nanoparticles were used instead of 60 wt parts of silver nanoparticles.

The content of silver in the lithium alloy layer was 60 wt parts based on 100 wt parts of lithium in the lithium alloy layer.

### Example 1-4

An anode was prepared in the same manner as in Example 1-1, except that 75 wt parts of silver nanoparticles were used instead of 60 wt parts of silver nanoparticles.

The content of silver in the lithium alloy layer was 50 wt parts based on 100 wt parts of lithium in the lithium alloy layer.

### Example 1-5

An anode was prepared in the same manner as in Example 1-1, except that the current was applied at a current density of 0.2 mA/cm² for 20 hours instead of applying the current at the current density of 0.4 mA/cm² for 10 hours.

### Example 1-6

An anode was prepared in the same manner as in Example 1-1, except that the constant current was applied at a current density of 0.8 mA/cm² for 5 hours instead of applying the constant current at the current density of 0.4 mA/cm² for 10 hours.

### Comparative Example 1

As the electrodeposition solution, a mixed solvent prepared by mixing a solvent containing 1 wt% of LiNO₃ (lithium nitrate, by Sigma-Aldrich) dissolved in DOL (1,3-dioxolane, by Sigma-Aldrich) and a solvent containing 2.5 M LiFSI (lithium bis(fluorosulfonyl)imide, by Dongwha Electrolyte) dissolved in DME (1,2-dimethoxyethane, by Sigma-Aldrich) at a volume ratio of 1:1 was used.

To electrodeposit lithium on a copper current collector, a triple-layer microporous membrane (PP/PE/PP, Celgard H1612) with a thickness of 16 µm was placed between a lithium (Li) plate with a thickness of 200 µm and a copper current collector, and the electrodeposition solution was injected to assemble a cell.

4.0 mAh/cm² of lithium (corresponding to a lithium thickness of 20 µm) was electrodeposited on the copper current collector by applying a constant current (current density: 0.4 mA/cm2) to the cell for 10 hours.

After disassembling the cell, the copper current collector on which lithium had been electrodeposited was washed with DME, dried in a glove box (MBRAUN) filled with argon (Ar) gas for 24 hours, and then flattened using a roll press at room temperature to obtain an anode.

### Experimental Example 1: Results of nanoindenter (nanoindentation test) of anode

For the anodes of Example 1-1 and Comparative Example 1, the indentation depth (Depth, nm) and hardness (Hardness, Mpa) were measured according to the load (Load, mN) applied to the anodes using a nano indenter (NanoTest NTX, Micro Materials).

FIG. 2 is a graph illustrating the measured indentation depth according to the load applied to the anodes of Example 1-1 and Comparative Example 1.

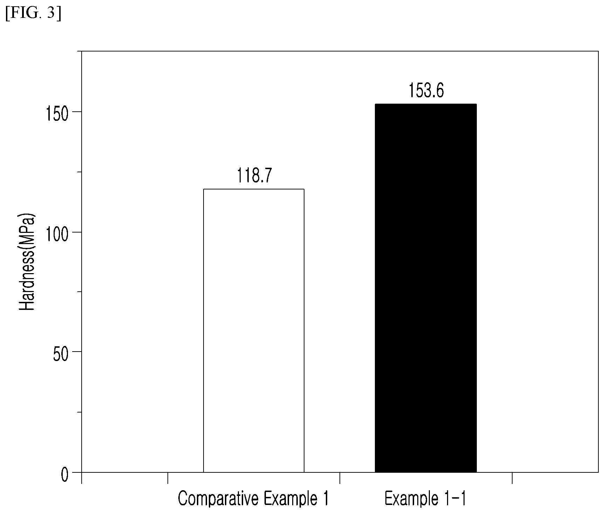

FIG. 3 is a graph illustrating the hardness of the anodes of Example 1-1 and Comparative Example 1.

Referring to FIG. 2 and FIG. 3, it can be seen that the indentation depth (500 nm to 650 nm) of the anode of Example 1-1 is shallower than the indentation depth (620 nm to 800 nm) of the anode of Comparative Example 1, indicating that it has relatively greater rigidity. In addition, it can be seen that the hardness (153.6 Mpa) of the anode of Example 1-1 is greater than the hardness (118.7 Mpa) of the anode of Comparative Example 1. Accordingly, it can be seen that the anode of Example 1-1, which includes a lithium alloy layer including lithium and an alloying metal different from lithium and a protective layer including a lithium compound and an oxide of the alloying metal, exhibits superior mechanical properties compared to the anode of Comparative Example 1.

### Experimental Example 2: Surface analysis of anode according to change in silver content

Scanning electron microscopy (SEM) and energy-dispersive spectroscopy (EDS) were performed on the anodes of Examples 1-1 to 1-4.

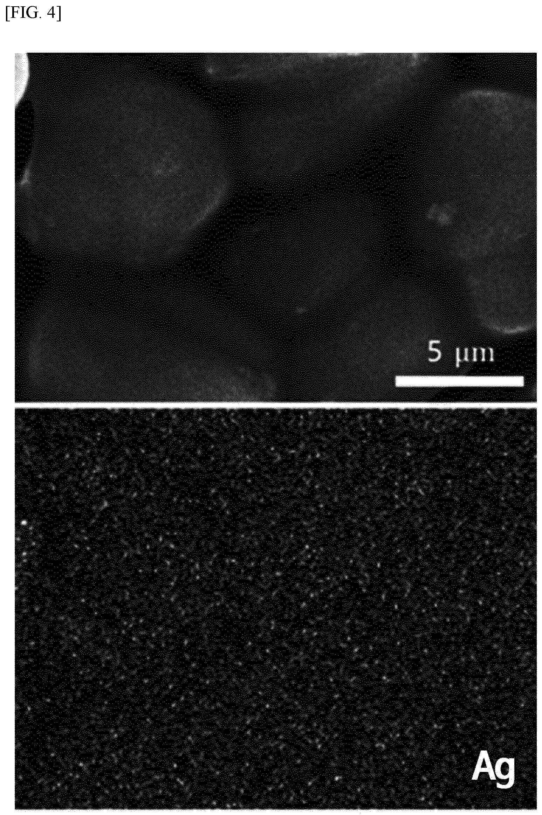

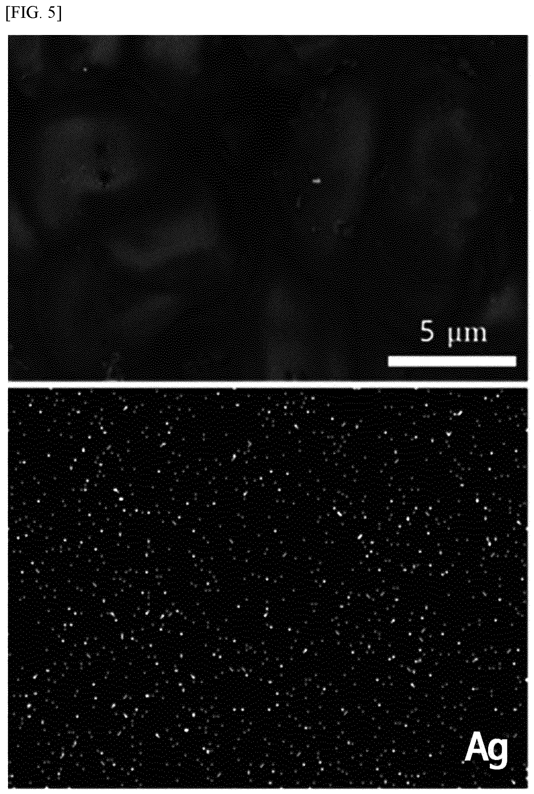

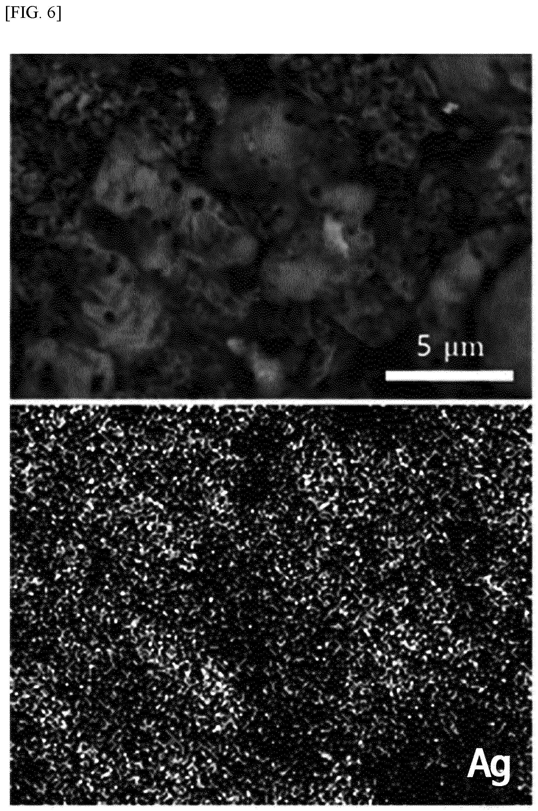

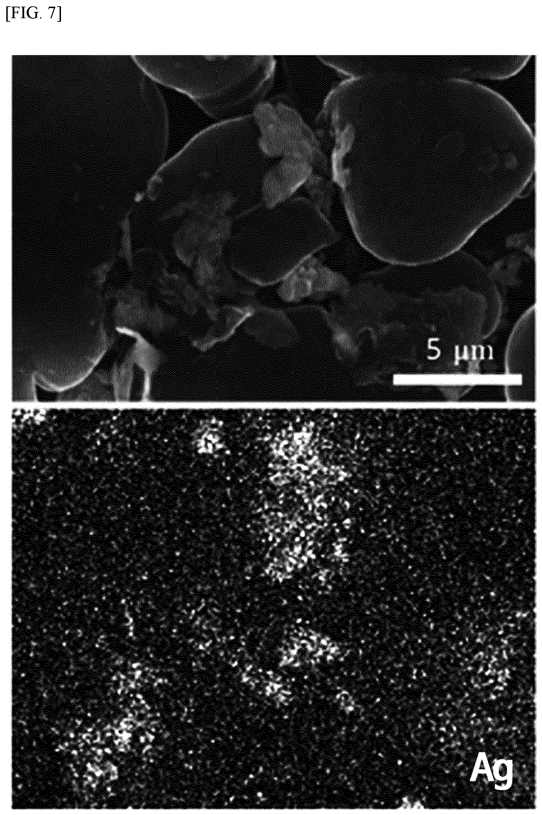

FIGS. 4 to 7 are scanning electron microscopy (SEM) and energy-dispersive spectroscopy (EDS) images showing the surfaces of anodes of Examples 1-1 to 1-4, respectively.

Referring to FIGS. 4 to 7, the anodes of the examples included a lithium alloy layer and a protective layer. In particular, when the silver content was 1 to 40 wt parts based on 100 wt parts of the electrodeposited lithium, the silver was more uniformly distributed in the lithium alloy layer, and a more uniform alloy layer was formed.

### Experimental Example 3: Surface analysis of anode according to current density change

SEM analysis of the cross-sections of the anodes of Examples 1-1, 1-5, and 1-6 was performed.

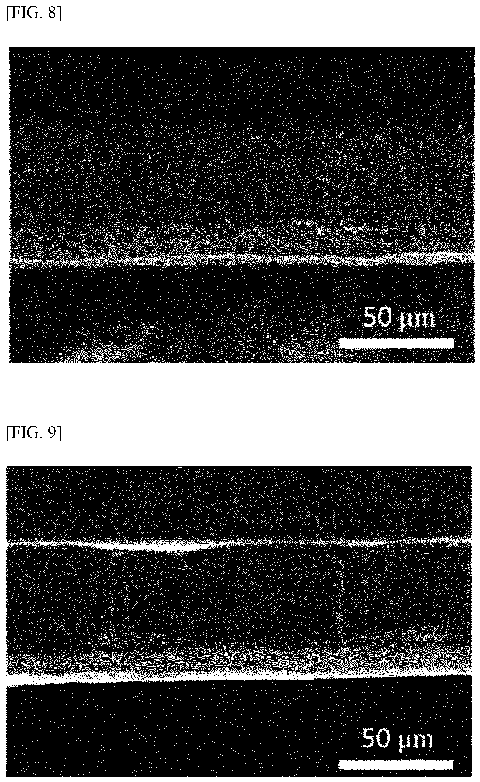

FIGS. 8 to 10 are scanning electron microscopy (SEM) images showing the cross-sections of anodes of Examples 1-1, 1-5, and 1-6, respectively.

Referring to FIGS. 8 to 10, it can be confirmed that lithium electrodeposition becomes more uniform when the current density is 0.4 mA/cm2 or less.

### Experimental Example 4: Manufacture of all-solid-state battery

### Experimental Example 2

NCM (LiNi_{0.78}Co_{0.10}Mn_{0.12}O₂, by L&F), Li₆PS₅Cl (D₅₀: 1 µm, by Jeong Kwan Display co), and VGCF (vapor-grown carbon fiber, by Sigma-Aldrich) were mixed in a mortar and pestle at a mass ratio of 67:29:4, and loaded at about 16.2 mg/cm² to prepare a composite cathode.

Li₆PS₅Cl powder (130 mg) was pressed at 74 Mpa to obtain a solid electrolyte pellet with a thickness of 700 µm.

31.9 mg of the composite cathode and nickel (Ni) foil were placed on the solid electrolyte pellet and pressed together at 260 Mpa. After placing the anode of Example 1-1 on the opposite side of the composite cathode, the assembled cell was compressed with a torque of 5 N·m to manufacture an all-solid-state battery.

### Comparative Example 2

NCM (LiNi_{0.78}Co_{0.10}Mn_{0.12}O₂, by L&F), Li₆PS₅Cl (D50: 1 µm, by Jeong Kwan Display co), and VGCF (vapor-grown carbon fiber, by Sigma-Aldrich) were mixed in a mortar and pestle at a mass ratio of 67:29:4, and loaded at 16.22 mg/cm² to prepare a composite cathode.

Li₆PS₅Cl powder (130 mg) was pressed at 74 Mpa to obtain a solid electrolyte pellet with a thickness of 700 µm.

31.9 mg of the composite cathode and nickel (Ni) foil were placed on the solid electrolyte pellet and pressed together at 260 Mpa. After placing the anode of Comparative Example 1 on the opposite side of the composite cathode, the assembled cell was compressed with a torque of 5 N·m to manufacture an all-solid-state battery.

### Experimental Example 5: Interface analysis of an all-solid-state battery

The all-solid-state batteries of Example 2 and Comparative Example 2 were cut, and SEM analysis was performed on the cross-sectional interface between the anode and the electrolyte.

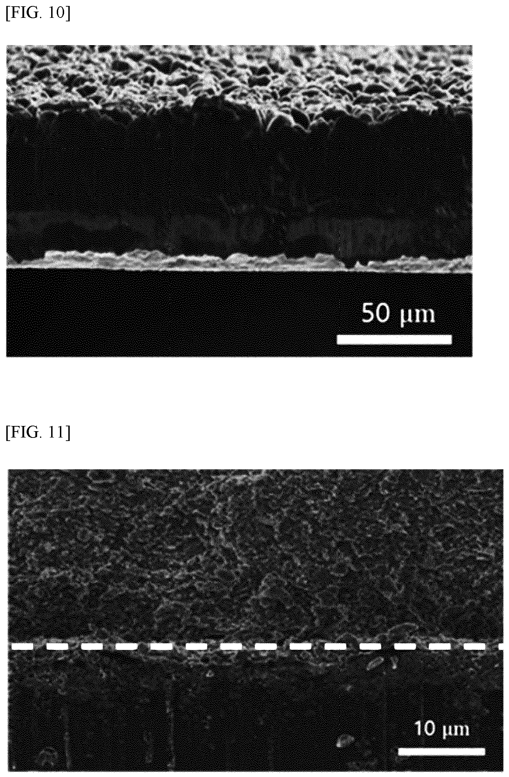

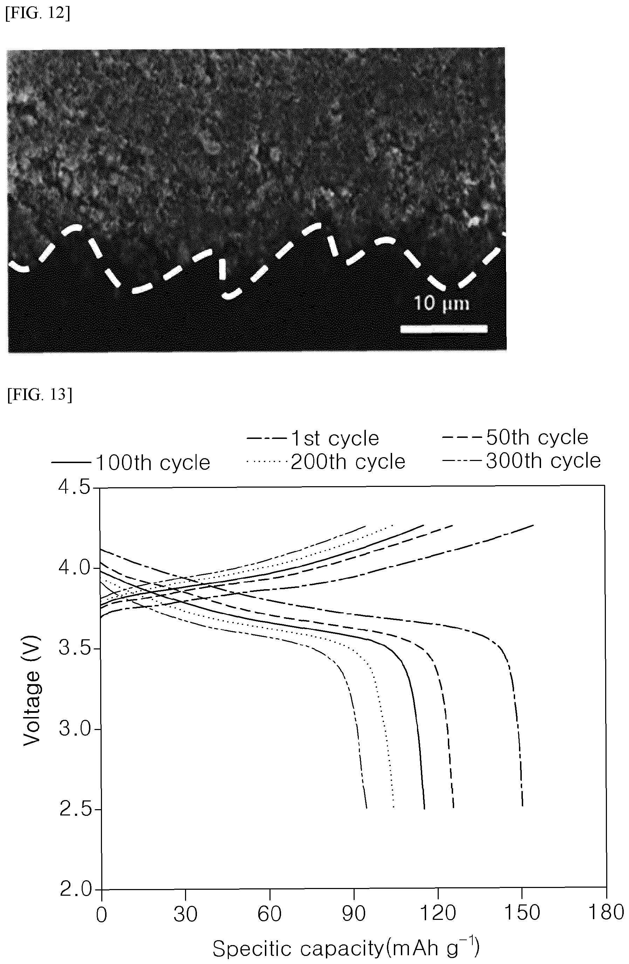

FIGS. 11 and 12 are scanning electron microscopy (SEM) images showing the anode-electrolyte interfaces of all-solid-state batteries of Example 2 and Comparative Example 2, respectively.

Referring to FIGS. 11 and 12, it can be seen that when a lithium alloy layer including lithium and an alloying metal different from lithium and a protective layer including a lithium compound and an oxide of the alloying metal are included, the mechanical strength is improved. Accordingly, deformation of the electrolyte-anode interface is reduced.

### Experimental Example 6: Performance evaluation of all-solid-state battery

### (18) Charge-discharge test

The cycling performance of the all-solid-state battery was evaluated at 25 °C using a battery cycler (WBS3000, WonA Tech). Before the cycling test, the cell underwent a single pre-conditioning cycle at 0.1 C (1.0 C = 185 mAh/g). After the pre-conditioning cycle, cycling performance was tested at a constant charge-discharge rate of 0.3 C at 25 °C, within a voltage range of 2.5 V to 4.25 V, for 300 cycles.

### (2) Charge-discharge curve

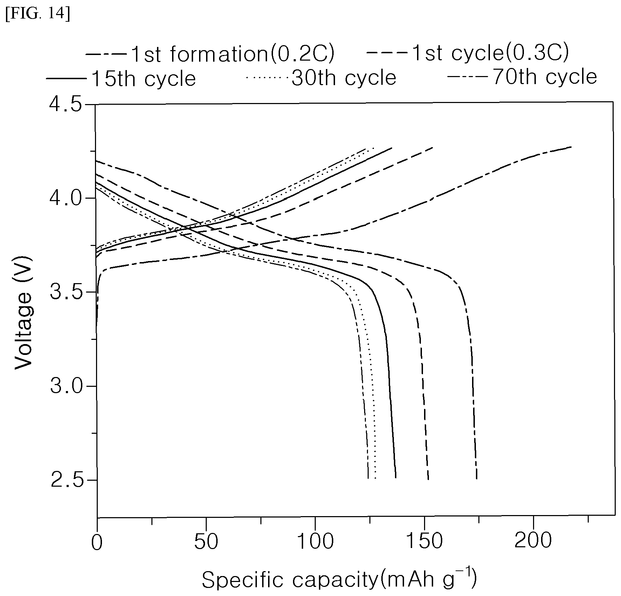

FIGS. 13 and 14 are charge-discharge curve graphs at 25 °C for the all-solid-state batteries of Example 2 and Comparative Example 2, respectively.

Referring to FIGS. 13 and 14, it can be seen that when an anode including a lithium alloy layer including lithium and an alloying metal different from lithium and a protective layer including a lithium compound and an oxide of the alloying metal is used, the cycle characteristics are improved over 300 charge-discharge cycles.

### (3) Cycle life characteristics

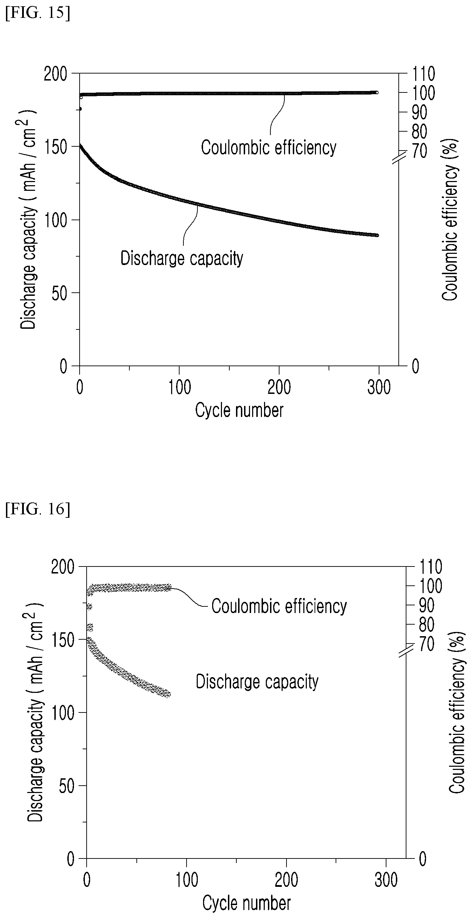

FIGS. 15 and 16 are graphs showing the discharge capacity and Coulombic efficiency (η) according to the number of cycles at 25 °C for the all-solid-state batteries of Example 2 and Comparative Example 2, respectively

The Coulombic efficiency was measured by dividing the discharge capacity by the charge capacity for each cycle and multiplying the result by 100.

Referring to FIGS. 15 and 16, it can be seen that the cycle life characteristics of the all-solid-state battery of Example 2 were improved compared to those of the all-solid-state battery of Comparative Example 2.

In the case of the all-solid-state battery of Example 2, interface uniformity and the mechanical properties of the protective film were improved, thereby suppressing the growth of lithium dendrites, and enhancing both cycle performance and cycle life characteristics.

### [Description of Reference Numerals]

110: Current collector
120: Lithium alloy layer
130: Protective layer

## Claims

1. An anode for a lithium secondary battery comprising:
a current collector;
a lithium alloy layer comprising lithium and an alloying metal different from lithium; and
a protective layer comprising a lithium compound and an oxide of the alloying metal,
wherein the lithium alloy layer is positioned between the current collector and the protective layer.

2. The anode for a lithium secondary battery according to claim 1, wherein the alloying metal comprises at least one selected from the group consisting of silver (Ag), magnesium (Mg), aluminum (Al), zinc (Zn), antimony (Sb), silicon (Si), tin (Sn), germanium (Ge), boron (B), indium (In), bismuth (Bi), sodium (Na), copper (Cu), barium (Ba), cobalt (Co), calcium (Ca), nickel (Ni), tantalum (Ta), manganese (Mn), and iron (Fe).

3. The anode for a lithium secondary battery according to claim 1 or 2, wherein a total weight of the oxide of the alloying metal included in a lower portion of the protective layer is greater than a total weight of the oxide of the alloying metal included in an upper portion of the protective layer.

4. The anode for a lithium secondary battery according to any one of claims 1 to 3, wherein the lithium compound of the protective layer comprises at least one selected from the group consisting of lithium nitride, lithium oxynitride, lithium oxide, lithium hydroxide and lithium halide.

5. The anode for a lithium secondary battery according to any one of claims 1 to 4, wherein, in the XPS spectrum of O 1s obtained by X-ray photoelectron spectroscopy (XPS) for the protective layer, an intensity of a first peak observed in a region where the binding energy is 530 eV to 535 eV is lower than an intensity of a second peak observed in a region where the binding energy is 525 eV or more and less than 530 eV.

6. The anode for a lithium secondary battery according to any one of claims 1 to 5, wherein a total weight of the lithium included in an upper portion of the lithium alloy layer is greater than a total weight of the lithium included in a lower portion of the lithium alloy layer.

7. The anode for a lithium secondary battery according to any one of claims 1 to 6, wherein a content of the alloying metal in the lithium alloy layer is 1 to 40 parts by weight based on 100 parts by weight of lithium.

8. The anode for a lithium secondary battery according to any one of claims 1 to 7, wherein the lithium alloy layer has a thickness of 5 µm to 40 µm.

9. A method for preparing an anode for a lithium secondary battery comprising:
forming a preliminary layer on one surface of a current collector, the preliminary layer comprising lithium and an alloying metal different from lithium;
assembling a cell comprising the preliminary layer, a lithium metal plate, and an electrodeposition solution including a solvent and a lithium source; and
converting the preliminary layer into a lithium alloy layer comprising lithium and the alloying metal by applying a current to the cell, and forming a protective layer comprising a lithium compound and an oxide of the alloying metal on the lithium alloy layer.

10. The method of preparing an anode for a lithium secondary battery according to claim 9, wherein the preliminary layer is formed by applying a composition comprising metal particles including the alloying metal, a dispersion medium and a binder.

11. The method of preparing an anode for a lithium secondary battery according to claim 10, wherein the binder comprises at least one selected from the group consisting of carboxymethyl cellulose, polyurethane, poly(ethylene oxide), poly(vinylidene fluoride), polyimide, poly(acrylic acid) and poly(vinyl acetate).

12. The method of preparing an anode for a lithium secondary battery according to claim 10 or 11, wherein a content of the binder is 3% by weight to 11% by weight based on a total weight of the metal particles and the binder.

13. The method of preparing an anode for a lithium secondary battery according to any one of claims 9 to 12, wherein the current is applied to have a current density of 0.4 mA/cm² or less.

14. The method of preparing an anode for a lithium secondary battery according to any one of claims 9 to 13, wherein the current is applied to have a charge amount of 2 mAh/cm² to 10 mAh/cm².

15. A lithium secondary battery comprising:
a cathode;
the anode according to any one of claims 1 to 8 disposed opposite to the cathode; and
a solid electrolyte layer disposed between the cathode and the anode.
